# EUROPEAN PATENT APPLICATION

(11) **EP 2 077 210 A1**
(43) Date of publication of application: **08.07.2009**
(21) Application number: 08425002.6
(22) Date of filing: 02.01.2008
(51) Int. Cl.: B60S 3/04, B62H 1/00

(54) **Automatic washing plant for motor vehicles and washing procedure thereof**

(71) Applicant: Ceccato S.p.A., 36075 Alte Ceccato di Montecchio Maggiore (VI) (IT)
(72) Inventor: Corrado, Molo, 36016 Thiene (VI) (IT); De Silvio, Marcelo Elvio, 36031 Vicenza (IT)
(74) Representative: Rapisardi, Mariacristina

(57) **Abstract**

The automatic washing plant for motor vehicles of the type comprising a portal (1) movable along a longitudinal translation direction and having a plurality of jets (3) for applying at least one washing agent around the outline of the motor vehicle to be washed, further comprises a stopping area (5) for the motor vehicle, distinguishing means for distinguishing between at least a car type and a motorcycle type (4B) of the motor vehicle at the stopping area (5), and stabilising means (9) for providing a stable support (9) of the motorcycle type (4B) of the motor vehicle during its washing at the stopping area (5).

## Description

The present invention relates to an automatic washing plant for motor vehicles.

Automatic brushless washing plants generally comprise a portal movable along a longitudinal translation path and having a plurality of jets for applying at least one washing agent around the outline of the motor vehicle to be washed. The motor vehicle is generally driven into, and stopped within, the washing plant, the washing programme is started, and the portal is automatically moved along the longitudinal translation path, applying washing agent along the motor vehicle. The portal can also be used for applying other agents, such as foaming agents and wax, and for drying the vehicle.

The automatic washing arrangement furthermore provides for the suitable movement of the jets such that the washing effect is improved.

However, the automatic washing plants of the prior art are limited in their functionality. While they function well for motor vehicles with four wheels, they do not function at all for motor vehicles with two wheels, such as motorcycles.

Motorcycle type vehicles are inherently unstable when in a stopped position due to the fact that the centre of mass is high relative to the distance between the points of support. During high pressure washing or drying, this instability is further exacerbated by the forces that the high pressure jets exert upon the motorcycle from various directions. There is thus the risk that the motorcycle can fall while stopped inside the washing plant, thereby potentially damaging the motorcycle or the washing equipment, or causing injury to the user, as well as not achieving the desired washing effect.

An additional problem of the automatic washing plants of the prior art is their poor capacity to wash motorcycles effectively. The lateral profile of the motorcycle is much more angular that of a car and the difference in silhouette and surface profile render the conventional washing action of the plants of the prior art ineffective.

The technical task proposed by the present invention is therefore that of providing an automatic washing plant that overcomes the noted technical drawbacks of the prior art.

Within the scope of this technical task is therefore that of providing a safe, simple, cost-effective automatic washing plant capable of washing motor vehicles, including both car and motorcycle type motor vehicles.

Another object of the invention is that of providing an automatic washing plant with improved capacity to wash motorcycle type motor vehicles effectively.

The technical task, as well as these an other objects, are achieved according to the present invention by an automatic washing plant for motor vehicles of the type comprising a portal movable along a longitudinal translation direction and having a plurality of jets for applying at least one washing agent around the outline of the motor vehicle to be washed, characterised in that it comprises a stopping area for said motor vehicle, distinguishing means for distinguishing between at least a car type and a motorcycle type of said motor vehicle at said stopping area, and stabilising means for providing a stable support of said motorcycle type of said motor vehicle during its washing at said stopping area.

The present invention also relates to a method for washing motor vehicles in an automatic washing plant of the type comprising a portal movable along a longitudinal translation direction and having a plurality of jets for applying at least one washing agent around the outline of the motor vehicle to be washed at a stopping area of said plant, characterised in that it comprises a first step of distinguishing between at least a car type and a motorcycle type of said motor vehicle at said stopping area, a second step of providing a stable support for said motorcycle type of said motor vehicle during its washing at said stopping area when the presence of said motorcycle type of said motor vehicle is detected by said distinguishing means, and a third step of directing said plurality of jets toward the portal vertical centre plane parallel to the longitudinal translation direction of said portal when said stable support for said motorcycle type of said motor vehicle is provided

The stabilising means allow for the increased functionality of the washing plant by enabling safe washing of motorcycle type of motor vehicles by preventing the motorcycle from falling, mitigating the risks associated therewith.

Furthermore, the distinguishing means allow for the improved effectiveness in the plant's capacity to wash motorcycle type of motor vehicles by allowing the system to select the washing programme appropriate for the type of motor vehicle detected. The combination of the distinguishing means and the stabilising means further help to improve this effectiveness by helping to ensure that the motorcycle is correctly aligned relative to the jets. The step of directing the jets toward to the portal vertical centre plane then optimises the effectiveness of the washing of the motorcycle.

The use of distinguishing means and stabilising means further provide a simple, cost-efficient arrangement for washing a wide range of motor vehicles, including motorcycles.

Other characteristics of the present invention are moreover defined in the subsequent claims. Further characteristics and advantages of the present invention will be more evident from the description of a preferred, but not exclusive, embodiment of the automatic washing plant according to the finding, illustrated in the attached nonlimiting drawings, wherein:

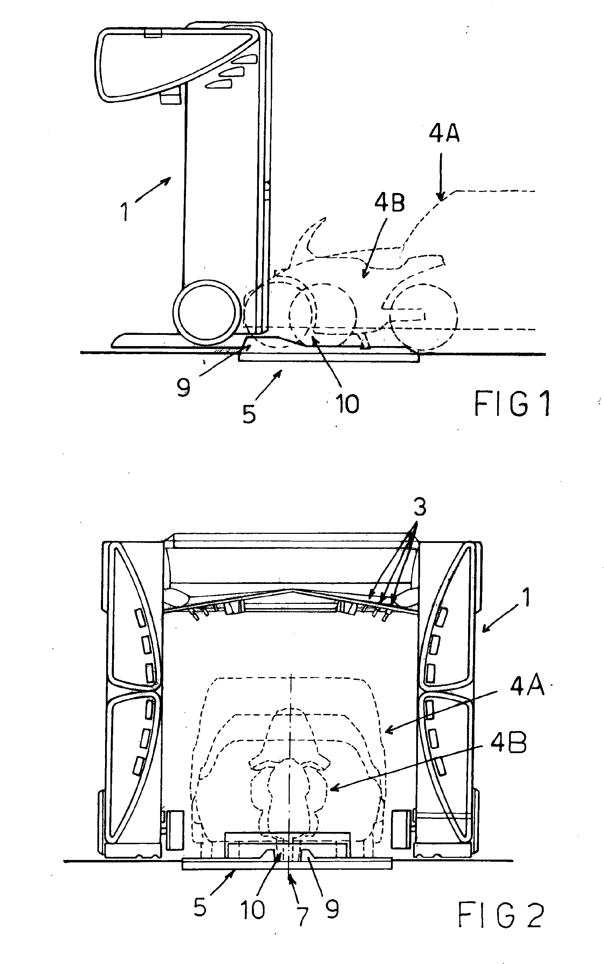

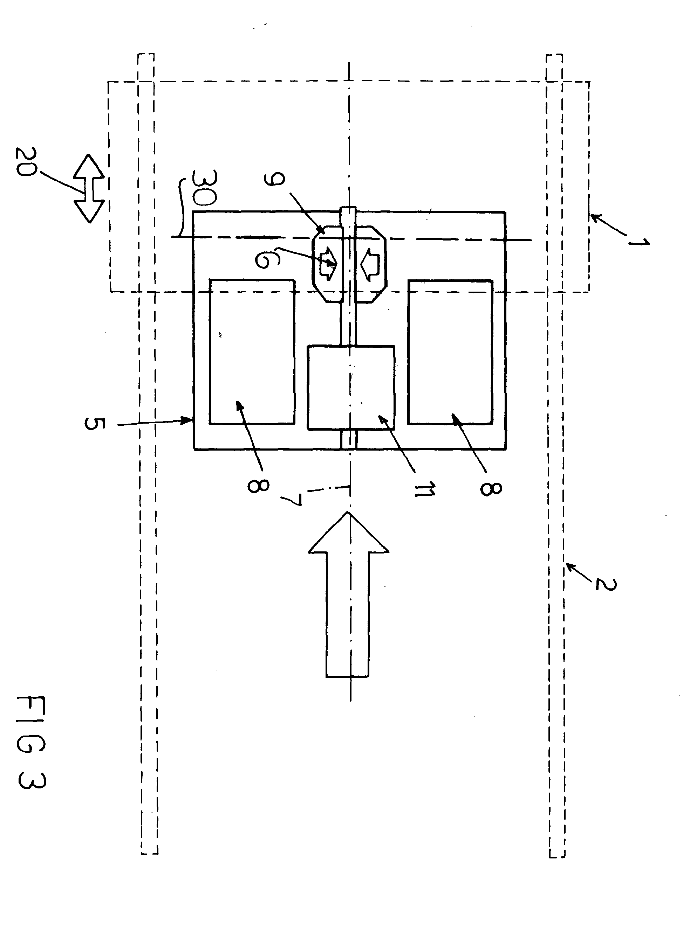

Figures 1, 2 and 3 show a side, front and floor plan view, respectively, of one embodiment of the invention with either a motorcycle type or a car type of motor vehicle.

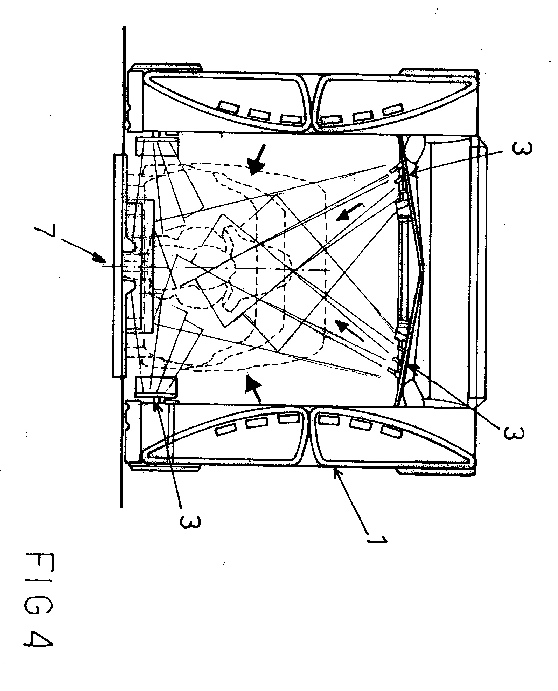

Figure 4 shows a front view of one embodiment of the invention during washing, with either a motorcycle type of a car type of motor vehicle.

With reference to the above figures, the automatic washing plant comprises a portal (1) movable along a longitudinal translation path (2) indicated by direction arrow (20) and having a plurality of jets (3) for applying at least one washing agent around the outline of the motor vehicle to be washed. A stopping area for the motor vehicle is preferably defined by a platform (5). The plant further comprises distinguishing means for distinguishing between at least a car type (4A) and a motorcycle type (4B) of motor vehicle at the stopping area, as well as stabilising means for providing a stable support of a motorcycle type of motor vehicle during its washing at the stopping area. These distinguishing means and stabilising means are preferably also located on or in the platform (5).

The distinguishing means preferably comprise at least one first sensor (6), preferably in the form of a search light, for detecting the presence of a motorcycle type (4B) of motor vehicle. This is advantageously arranged adjacent to the portal vertical centre plane (7) parallel to the longitudinal translation direction of the portal (1). The distinguishing means preferably also comprise at least one second sensor (8), preferably in the form of a load cell or a proximity sensor, for detecting the presence of a car type (4A) of motor vehicle. This is advantageously positioned at the rest zone, within the stopping area, of one of the front wheels of the car type (4A) of motor vehicle. One such second sensor (8) is sufficient for detecting the presence of a car type motor vehicle, but, for safety, two such sensors are provided, each positioned at a rest zone, within the stopping area, of a corresponding front wheel of the car type of motor vehicle (4A). This prevents the possibility of incorrect functioning of the washing plant in the case that a motorcycle type (4B) vehicle is accidentally positioned at the car front wheel rest zone.

The plant may further comprise indicating means for indicating the correct stopping position within said stopping area for said car type (4A) of motor vehicle. These may be in the form of sensors (i. e. search light 30) connected to light indicators, such that the user is alerted when the car type vehicle is in the correct stopping position.

The stabilising means preferably comprise a clamping device (9) at the rest zone, within the stopping area, of the front wheel (10) of the motorcycle type (4B) of motor vehicle for preventing displacement of the front wheel. This in turn provides a stable support for the entire motorcycle, ensuring that is it securely stable within the washing plant and helping to ensure the correct orientation of the motorcycle relative to the jets (3). Advantageously, the at least one first sensor (6) can be integrated into the clamping device (9).

The stabilising means may also comprise a rough surface (11) at the rest zone, within the stopping area, for securely supporting the kickstand of the motorcycle type (4B).

The distinguishing means are preferably connected to the control unit of the plant, and the stabilising means are preferably connected to the distinguishing means therethrough, such that the stabilising means are activated when the presence of a motorcycle type (4B) of motor vehicle is detected by the distinguishing means.

The method of the present invention for washing motor vehicles in an automatic washing plant having a movable portal (1) and a plurality of jets (3) comprises a first step of distinguishing between at least a car type (4A) and a motorcycle type (4B) of motor vehicle at a stopping area of the plant. It further comprises a second step of providing a stable support for the motorcycle type (4B) of vehicle during its washing at the stopping area when the presence of the motorcycle type vehicle is detected by the distinguishing means. The method comprises a third step of directing the plurality of jets (3) toward the portal vertical centre plane (7) parallel to the longitudinal translation direction of the portal (1) when the stable support for the motorcycle type (4B) of vehicle is provided.

The method preferably comprises a time delay between the first and the second step such that the activation of provision of a stable support for the motorcycle type (4B) vehicle is delayed by a pre-set time from the distinguishing of the of the motor vehicle type. This ensures that the motorcycle type vehicle can be correctly positioned within the stabilising means and allows the user to move away.

The method optionally comprises a fourth step of matching the washing program to the distinguished type of motor vehicle.

Furthermore, in the third step, the plurality of jets (3) may be directed in an oval cone-shaped trajectory transversal to the portal centre plane (7).

In typical operation of one embodiment of the invention, the user drives the motor vehicle into the washing plant, onto the platform (5). In the case of a car type (4A) of vehicle, indicating means indicate to the user the correct stop position of the vehicle. In the case of a motorcycle type (4B) of vehicle, the vehicle is positioned such that the front wheel (10) is positioned within the clamping device (9). A first sensor (6) or a second sensor (7) will detect the presence of either a car type or a motorcycle type of motor vehicle, and sends a signal to the control unit.

If a motorcycle type (4B) vehicle is detected, the control unit automatically activates the clamping device (9) after a pre-set time delay, thereby providing a stable support for the vehicle. Upon activation of the clamping device, the control unit directs the plurality of jets (3) toward the portal vertical centre plane (7). The washing program is matched to the type of motor vehicle detected by the distinguishing means, and the portal (1) moves along the longitudinal translation path. It will be appreciated that the present invention can be used with a variety of functions, including drying, high pressure washing, and surface treatment such as waxing.

The automatic washing plant for motor vehicles thus conceived is susceptible to numerous modifications and variations, all falling within the scope of the inventive concept; furthermore, all details may be substituted by technically equivalent elements. In practice, any material type or size may be used, according to the needs and the state of the art.

## Claims

1. An automatic washing plant for motor vehicles of the type comprising a portal movable along a longitudinal translation direction and having a plurality of jets for applying at least one washing agent around the outline of the motor vehicle to be washed, **characterised in that** it comprises a stopping area for said motor vehicle, distinguishing means for distinguishing between at least a car type and a motorcycle type of said motor vehicle at said stopping area, and stabilising means for providing a stable support of said motorcycle type of said motor vehicle during its washing at said stopping area.

2. An automatic washing plant as claimed in claim 1, **characterised in that** said distinguishing means are connected to the control unit of said plant.

3. An automatic washing plant as claimed in any preceding claim, **characterised in that** said stabilising means are connected to said distinguishing means through said control unit for activation when the presence of said motorcycle type of said motor vehicle is detected by said distinguishing means.

4. An automatic washing plant as claimed in any preceding claim, **characterised in that** it comprises a platform for providing said stopping area for said motor vehicle, and equipped with said support means and said distinguishing means.

5. An automatic washing plant as claimed in any preceding claim, **characterised in that** said distinguishing means comprise at least one first sensor for detecting the presence of said motorcycle type of said motor vehicle.

6. An automatic washing plant as claimed in any preceding claim, **characterised in that** said at least one first sensor is arranged adjacent to the portal vertical centre plane parallel to said longitudinal translation direction of said portal.

7. An automatic washing plant as claimed in any preceding claim, **characterised in that** said at least one first sensor comprises a search light.

8. An automatic washing plant as claimed in any preceding claim, **characterised in that** said distinguishing means comprise at least one second sensor for detecting the presence of said car type of said motor vehicle.

9. An automatic washing plant as claimed in any preceding claim, **characterised in that** said at least one second sensor is positioned at the rest zone, within said stopping area, of one of the front wheels of said car type of said motor vehicle.

10. An automatic washing plant as claimed in any preceding claim, **characterised in that** said distinguishing means comprise two second sensors, each positioned at a rest zone, within said stopping area, of a corresponding front wheel of said car type of said motor vehicle.

11. An automatic washing plant as claimed in any preceding claim, **characterised in that** said at least one second sensor comprises a magnetic proximity sensor.

12. An automatic washing plant as claimed in any preceding claim, **characterised in that** said at least one second sensor comprises a load cell.

13. An automatic washing plant as claimed in any preceding claim, **characterised in that** said stabilising means comprise a clamping device at the rest zone, within said stopping area, of the front wheel of said motorcycle type of said motor vehicle for preventing displacement of said front wheel.

14. An automatic washing plant as claimed in any preceding claim, **characterised in that** said at least one first sensor is integrated into said clamping device.

15. An automatic washing plant as claimed in any preceding claim, **characterised in that** said stabilising means further comprise a rough surface at the rest zone, within said stopping area, for securely supporting the kickstand of said motorcycle type of said motor vehicle.

16. An automatic washing plant as claimed in any preceding claim, **characterised in that** it comprises indicating means for indicating the correct stopping position within said stopping area for said car type of said motor vehicle.

17. A method for washing motor vehicles in an automatic washing plant of the type comprising a portal movable along a longitudinal translation direction and having a plurality of jets for applying at least one washing agent around the outline of the motor vehicle to be washed at a stopping area of said plant, **characterised in that** it comprises a first step of distinguishing between at least a car type and a motorcycle type of said motor vehicle at said stopping area, a second step of providing a stable support for said motorcycle type of said motor vehicle during its washing at said stopping area when the presence of said motorcycle type of said motor vehicle is detected by said distinguishing means, and a third step of directing said plurality of jets toward the portal vertical centre plane parallel to said longitudinal translation direction of said portal when said stable support for said motorcycle type of said motor vehicle is provided.

18. A method for washing motor vehicles as claimed in claim 17, **characterised in that** in said third step said plurality of jets are directed in an oval cone-shaped trajectory transversal to said centre plane.

19. A method for washing motor vehicles as claimed in claim 17 or 18, **characterised in that** it comprises a fourth step of matching the washing program to the distinguished type of motor vehicle.

20. A method of washing motor vehicles as claimed in any of claims 17 to 19, **characterised in that** of delaying the activation of said second step by a pre-set time delay from said first step.
